# EUROPEAN PATENT SPECIFICATION

(11) **EP 2 929 164 B1**
(45) Date of publication and mention of the grant of the patent: **27.01.2021**
(21) Application number: 13861373.2
(22) Date of filing: 02.12.2013
(51) Int. Cl.: F02C 7/236, F02C 7/36, F02C 7/32

(54) **GAS TURBINE ENGINE WITH A LOW SPEED SPOOL DRIVEN PUMP ARRANGEMENT**
GASTURBINENMOTOR MIT EINER DURCH EINEN ROTOR MIT GERINGER DREHZAHL ANGETRIEBENE PUMPENANORDNUNG
TURBINE À GAZ AVEC UN AGENCEMENT DE POMPE ENTRAÎNÉ PAR UNE ROTOR FAIBLE VITESSE

(30) Priority: 05.12.2012 US 201213705462
(43) Date of publication of application: 14.10.2015
(73) Proprietor: United Technologies Corporation, Farmington, CT 06032 (US)
(72) Inventor: SUCIU, Gabriel L., Glastonbury, Connecticut 06033 (US); DYE, Christopher M., San Diego, California 92117 (US)
(74) Representative: Dehns
(86) International application number: PCT/US2013/072547
(87) International publication number: WO 2014/088925

(56) References cited:
- EP-A2- 2 060 759
- EP-A2- 2 447 507
- US-A- 3 486 582
- US-A- 4 375 745
- US-A- 4 424 665
- US-A1- 2009 123 274
- US-A1- 2010 212 281
- US-A1- 2010 294 597
- US-A1- 2010 296 947
- US-A1- 2010 296 947
- US-A1- 2010 326 085
- US-A1- 2010 326 085
- US-A1- 2011 243 772

## Description

### BACKGROUND

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

A gas turbine engine typically requires different amounts of fuel during different operating conditions. For example, more fuel is needed during aircraft takeoff than during cruising conditions. A pump typically provides the same amount of fuel flow during each of those conditions. When less fuel is needed, the excess is recirculated within the fuel delivery system. Recirculating fuel requires additional components and introduces additional heat management issues.

Prior art gas turbine engines are disclosed in documents EP 2 060 759 A2,

US 2010/326085 A1, EP 2 447 507 A2, US 3 486 582 A and US 4 424 665 A.

### SUMMARY

The present invention provides a gas turbine engine as recited in claim 1, and a method of operating a gas turbine engine as recited in claim 7.

Features of embodiments of the invention are set forth in the dependent claims.

### BRIEF DESCRIPTION OF THE DRAWINGS

Figure 1 is a schematic view of an example gas turbine engine.
Figure 2 schematically illustrates selected portions of an example gas turbine engine fluid delivery arrangement.
Figure 3 schematically illustrates an example fuel delivery arrangement not covered by the claimed invention.
Figure 4 schematically illustrates an example lubricant delivery arrangement.

### DETAILED DESCRIPTION

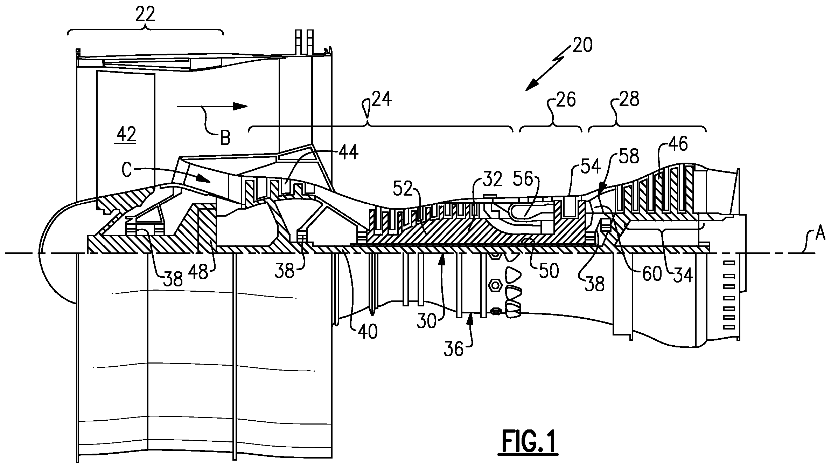

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to the combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts disclosed in this description and the accompanying drawings are not limited to use with turbofans as the teachings may be applied to other types of turbine engines, such as a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used in this description, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 and sets airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved. The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3. In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines. A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft. (10,668 metres), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7) ^{0.5}] (where °R = K x 9/5). The "Low corrected fan tip speed", according to one non-limiting embodiment, is less than about 1150 ft/second.

The example gas turbine engine includes the fan 42 that comprises in one non-limiting embodiment less than about 26 fan blades. In another non-limiting embodiment,

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

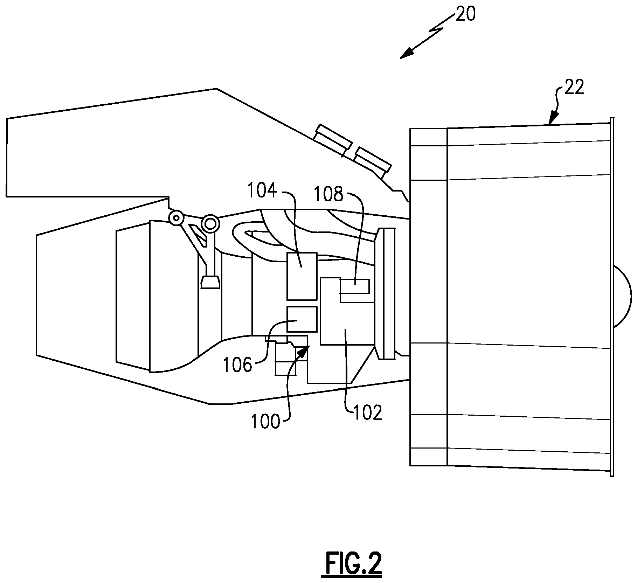

Figure 2 schematically illustrates selected portions of the gas turbine engine 20. A fluid delivery system 100 includes a low speed spool power extraction module 102 that is associated with the low speed spool 30 (Figure 1). In one example, the low speed spool power extraction module 102 includes a variable-speed transmission with multiple takeoffs for driving several devices. A first fuel pump 104 is driven based upon rotation of the low speed spool 30. The first fuel pump 104 is operatively associated with the power extraction module 102 to provide an appropriate input speed and torque to the first fuel pump 104. The power extraction module 102 is an interface between the low speed spool 30 and the first fuel pump 104. A first lubricant pump 106 is associated with the power extraction module 102. The first lubricant pump 106 is driven responsive to rotation of the low speed spool 30. In this example, a hydraulic pump 108 is also driven based upon rotation of the low speed spool 30.

Utilizing a low speed spool power extraction module 102 for driving the pumps 104-108 can decrease thrust-specific fuel consumption compared to arrangements that attempt to drive a pump based upon rotation of the high speed spool. In a geared turbo fan architecture, the low speed spool has additional power capabilities that have less effect on engine efficiency compared to a smaller sized high speed spool.

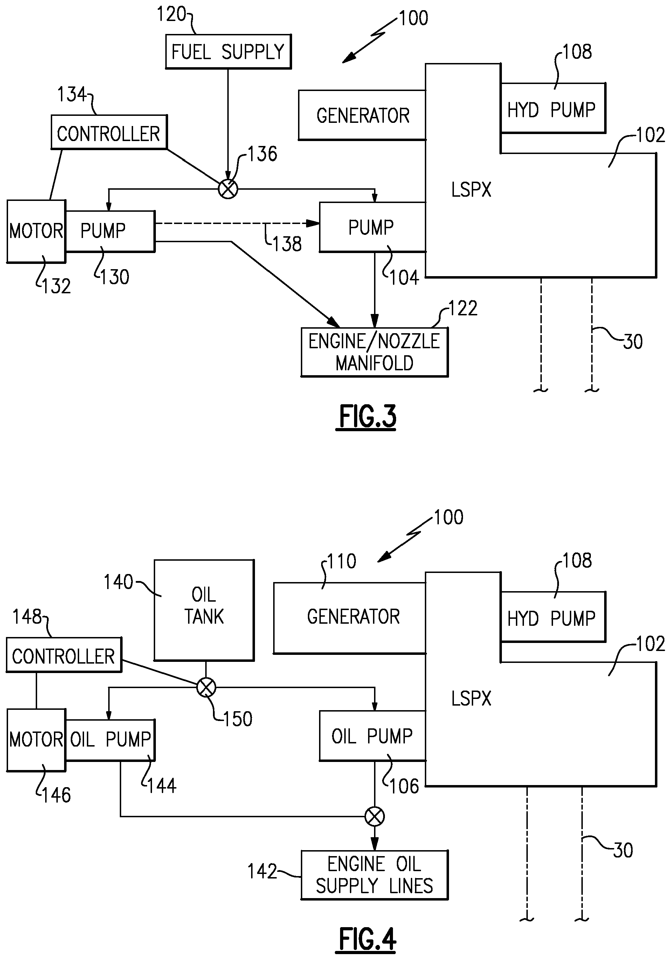

Figure 3 schematically illustrates a fuel delivery arrangement not covered by the claimed invention for providing fuel from a supply 120 to appropriate portions of the engine, such as an engine nozzle or manifold. The engine requires a first amount of fuel during a first operating condition and a second, larger amount of fuel during a second operating condition. In this example, the first fuel pump 104 provides fuel to the manifold 122 during the first operating condition. The first fuel pump 104 has a fuel delivery capacity corresponding to at least the amount of fuel needed during the first operating condition. In one example, the first operating condition corresponds to the engine operating at a cruise setting.

The engine requires a second, larger amount of fuel during the second operating condition, such as engine start. The example of Figure 3 includes a second fuel pump 130 for providing fuel during the second operating condition. In this example, the second fuel pump 130 has a fuel delivery capacity corresponding to an amount that is at least the difference between the amount of fuel required during the first operating condition and the amount of fuel required during the second operating condition. When the first fuel pump 104 and the second fuel pump 130 operate together, the second amount of fuel is provided to the manifold 122 for the second operating condition.

In the illustrated example, the second fuel pump 130 is driven by an electric motor 132. A controller 134 controls operation of the electric motor 132 and a valve 136 for selectively controlling the amount of fuel provided to the manifold 122 at any given time. The controller 134 is programmed to recognize when the first operating condition exists or the second operating condition exists and appropriately controls the valve 136 and the electric motor 132 for controlling whether the second fuel pump 130 is used for providing fuel to the manifold 122.

In the example of Figure 3, the second pump 130 may also be useful for supplementing the amount of fuel delivered by the pump 104 as schematically shown at 138. For example, the second fuel pump 130 may be used as a boost for actuator flow. The controller 134 is suitably programmed to provide such operation in example embodiments that include this feature.

Figure 4 schematically shows a lubricant delivery arrangement in which the first oil pump 106 is used for supplying lubricant from a reservoir 140 to supply lines 142, which are used in a known manner to deliver lubricant to engine components. The engine 20 requires less lubricant during a first operating condition compared to the amount of lubricant required during a second operating condition. In one example, the first operating condition corresponds to the engine operating at cruise. The first oil pump 106 has a lubricant delivery capacity corresponding to at least the amount of lubricant required during the first operating condition.

A second oil pump 144 provides lubricant to the supply lines 142 during the second operating condition in addition to the amount of lubricant provided by the first oil pump 106. In this example, the second oil pump 144 is driven by an electric motor 146. A controller 148 controls the motor 146 and a valve 150 depending on whether the engine 20 is operating under the first operating condition or the second operating condition. The second oil pump 144 has a lubricant delivery capacity corresponding to at least a difference between the amount of lubricant required during the second operating condition and the amount of lubricant required during the first operating condition.

The illustrated example arrangements allow for using individual pumps that are smaller than pumps typically included with gas turbine engines for fuel or oil delivery. Using smaller pumps allows for associating those pumps with the low speed spool 30 instead of having to drive those pumps from the high speed spool. Using smaller pumps provides the advantage of requiring less space for those components. Additionally, less power is extracted from engine operation to operate the pumps, which leaves more power for propulsion of an aircraft or other power requirements. For example, instead of having to size a single pump for delivering fuel or oil so that it is capable of meeting the demands of the second operating condition, which occurs during a relatively limited portion of the engine operation time, a smaller first fuel pump 104 or first oil pump 106 may be utilized. Including a second pump to supplement the fluid delivery requirements during the second operating condition allows for the first pump 104 or 106 to operate during the first operating condition while leaving the second pump 130 or 144 dormant during that condition.

Another feature of the illustrated arrangement is that it reduces the requirement for recirculating fuel or oil during cruise conditions. Conventional arrangements include such recirculation which also involves heat rejection requirements. The illustrated arrangement in which fluid delivery requirements are split between two different pumps provides additional efficiencies during engine operation.

The preceding description is illustrative rather than limiting in nature. Variations and modifications to the disclosed examples may become apparent to those skilled in the art. The scope of legal protection can only be determined by studying the following claims.

## Claims

1. A gas turbine engine (20), comprising:
a propulsion assembly including at least a high pressure turbine (54) and a low pressure turbine (46), the turbines (46, 54) being situated to rotate about an engine central axis (A), operation of the propulsion assembly requiring at least one fluid including requiring a first amount of the fluid during at least a first operating condition and a second, greater amount of the fluid during at least a second operating condition;
a low speed spool (30) configured to rotate about the engine central axis (A) with the low pressure turbine (46);
a first pump (106) that is operatively associated with the low speed spool (30) such that operation of the first pump (106) is dependent on rotation of the low speed spool (30), the first pump (106) having a first fluid delivering capacity configured to correspond to at least the first amount; and
a second pump (144) having a second fluid delivering capacity configured to correspond to at least a difference between the first amount and the second amount, the first pump (106) providing the fluid for propulsion assembly operation during the first and second operating conditions and the second pump (144) providing the fluid for propulsion assembly operation only during the second operating condition,
wherein:
the fluid is a lubricant, and
the second pump (144) is inactive during the first operating condition.

2. The gas turbine engine (20) of claim 1, comprising a controller (148) configured to:
determine at least one of the operating condition of the propulsion assembly or an amount of the fluid needed; and
control the second pump (144) to provide a corresponding amount of the fluid to the propulsion assembly.

3. The gas turbine engine (20) of claim 1 or 2, wherein the second pump (144) is driven by a power element distinct from the low speed spool (30).

4. The gas turbine engine (20) of any preceding claim, wherein the second fluid delivery capacity is lower than the first fluid delivery capacity.

5. The gas turbine engine (20) of any preceding claim, comprising a power extraction module (102) that is an interface between the low speed spool (30) and the first fluid pump (106).

6. The gas turbine engine (20) of claim 5, comprising at least one other pump operatively associated with the power extraction module (102) such that the other pump is driven based on rotation of the low speed spool (30).

7. A method of operating a gas turbine engine (20) that includes a propulsion assembly including at least a high pressure turbine (54) and a low pressure turbine (46), the turbines (46, 54) being situated to rotate about an engine central axis (A), operation of the propulsion assembly requiring at least one fluid including a first amount of the fluid during at least a first operating condition and a second, greater amount of the fluid during at least a second operating condition, comprising the steps of:
driving a first pump (106) using rotation of a low speed spool (30) configured to rotate about the engine central axis (A) with the low pressure turbine (46) for providing the fluid for propulsion assembly operation during the first and second operating conditions; and
driving a second pump (144) for providing the fluid for propulsion assembly operation with the first pump (106) only during the second operating condition, an amount of the fluid provided by the second pump (144) corresponding to a difference between the first amount and the second amount,
wherein:
the fluid is a lubricant; and
the method further comprises inactivating the second pump (144) during the first operating condition.

8. The method of claim 7, comprising:
determining at least one of the operating condition of the propulsion assembly or an amount of the fluid needed; and
controlling the second pump (144) to provide a corresponding amount of the fluid to the propulsion assembly.

9. The method of claims 7 or 8, comprising driving the second pump (144) using a power element distinct from the low speed spool (30).

10. The gas turbine engine (20) or method of claim 3 or 9, wherein the power element comprises an electric motor (146).

11. The method of any of claims 7 to 10, wherein:
the first pump (106) has a first fluid delivering capacity configured to correspond to at least the first amount; and
the second pump (144) has a lower, second fluid delivering capacity configured to correspond to at least a difference between the first amount and the second amount.

## Patentansprüche

1. Gasturbinenmotor (20), umfassend:
eine Antriebsanordnung, die zumindest eine Hochdruckturbine (54) und eine Niederdruckturbine (46) beinhaltet, wobei die Turbinen (46, 54) platziert sind, um sich um eine zentrale Motorachse (A) zu drehen, wobei Betrieb der Antriebsanordnung zumindest ein Fluid erfordert, darunter eine erste Menge des Fluids während zumindest einem ersten Betriebszustand und eine zweite, größere Menge des Fluids während zumindest einem zweiten Betriebszustand erfordert;
eine Niederdrehzahlspule (30), die konfiguriert ist, um sich mit der Niederdruckturbine (46) um die zentrale Motorachse (A) zu drehen;
eine erste Pumpe (106), die mit der Niederdrehzahlspule (30) wirkverbunden ist, sodass Betrieb der ersten Pumpe (106) von Drehung der Niederdrehzahlspule (30) abhängt, wobei die erste Pumpe (106) eine erste Fluidabgabekapazität aufweist, die konfiguriert ist, um zumindest der ersten Menge zu entsprechen; und
eine zweite Pumpe (144), die eine zweite Fluidabgabekapazität aufweist, die konfiguriert ist, um zumindest einem Unterschied zwischen der ersten Menge und der zweiten Menge zu entsprechen, wobei die erste Pumpe (106) das Fluid für Antriebsanordnungsbetrieb während des ersten und des zweiten Betriebszustands bereitstellt und die zweite Pumpe (144) das Fluid für Antriebsanordnungsbetrieb nur während des zweiten Betriebszustands bereitstellt,
wobei:
das Fluid Schmiermittel ist, und
die zweite Pumpe (144) während des ersten Betriebszustands inaktiv ist.

2. Gasturbinenmotor (20) nach Anspruch 1, umfassend eine Steuerung (148), die für Folgendes konfiguriert ist:
Bestimmen von zumindest einem von dem Betriebszustand der Antriebsanordnung oder einer erforderlichen Menge des Fluids; und
Steuern der zweiten Pumpe (144), um der Antriebsanordnung eine entsprechende Menge des Fluids bereitzustellen.

3. Gasturbinenmotor (20) nach Anspruch 1 oder 2, wobei die zweite Pumpe (144) durch ein Leistungselement angetrieben wird, das sich von der Niederdrehzahlspule (30) unterscheidet.

4. Gasturbinenmotor (20) nach einem vorhergehenden Anspruch, wobei die zweite Fluidabgabekapazität geringer als die erste Fluidabgabekapazität ist.

5. Gasturbinenmotor (20) nach einem vorhergehenden Anspruch, umfassend ein Leistungsextraktionsmodul (102), das eine Schnittstelle zwischen der Niederdrehzahlspule (30) und der ersten Fluidpumpe (106) ist.

6. Gasturbinenmotor (20) nach Anspruch 5, umfassend zumindest eine weitere Pumpe, die mit dem Leistungsextraktionsmodul (102) wirkverbunden ist, sodass die weitere Pumpe basierend auf Drehung der Niederdrehzahlspule (30) angetrieben wird.

7. Verfahren zum Betreiben eines Gasturbinenmotors (20), der eine Antriebsanordnung beinhaltet, die zumindest eine Hochdruckturbine (54) und eine Niederdruckturbine (46) beinhaltet, wobei die Turbinen (46, 54) platziert sind, um sich um eine zentrale Motorachse (A) zu drehen, wobei Betrieb der Antriebsanordnung zumindest ein Fluid erfordert, darunter eine erste Menge des Fluids während zumindest einem ersten Betriebszustand und eine zweite, größere Menge des Fluids während zumindest einem zweiten Betriebszustand, die folgenden Schritte umfassend:
Antreiben einer ersten Pumpe (106) unter Verwendung von Drehung einer Niederdrehzahlspule (30), die konfiguriert ist, um sich mit der Niederdruckturbine (46) um die zentrale Motorachse (A) zu drehen, um das Fluid für Antriebsanordnungsbetrieb während des ersten und des zweiten Betriebszustands bereitzustellen; und
Antreiben einer zweiten Pumpe (144), um das Fluid für Antriebsanordnungsbetrieb mit der ersten Pumpe (106) nur während des zweiten Betriebszustands bereitzustellen, wobei eine Menge des Fluids, die durch die zweite Pumpe (144) bereitgestellt wird, einem Unterschied zwischen der ersten Menge und der zweiten Menge entspricht,
wobei:
das Fluid ein Schmiermittel ist; und
das Verfahren ferner das Deaktivieren der zweiten Pumpe (144) während des ersten Betriebszustands umfasst.

8. Verfahren nach Anspruch 7, umfassend:
Bestimmen von zumindest einem von dem Betriebszustand der Antriebsanordnung oder einer erforderlichen Menge des Fluids; und
Steuern der zweiten Pumpe (144), um der Antriebsanordnung eine entsprechende Menge des Fluids bereitzustellen.

9. Verfahren nach Anspruch 7 oder 8, umfassend das Antreiben der zweiten Pumpe (144) unter Verwendung eines Leistungselements, das sich von der Niederdrehzahlspule (30) unterscheidet.

10. Gasturbinenmotor (20) oder Verfahren nach Anspruch 3 oder 9, wobei das Leistungselement einen Elektromotor (146) umfasst.

11. Verfahren nach einem der Ansprüche 7 bis 10, wobei:
die erste Pumpe (106) eine erste Fluidabgabekapazität aufweist, die konfiguriert ist, um zumindest der ersten Menge zu entsprechen; und
die zweite Pumpe (144) eine geringere, zweite Fluidabgabekapazität aufweist, die konfiguriert ist, um zumindest einem Unterschied zwischen der ersten Menge und der zweiten Menge zu entsprechen.

## Revendications

1. Turbine à gaz (20), comprenant :
un ensemble de propulsion comportant au moins une turbine haute pression (54) et une turbine basse pression (46), les turbines (46, 54) étant situées pour tourner autour d'un axe central de moteur (A), le fonctionnement de l'ensemble de propulsion nécessitant au moins un fluide comportant la nécessité d'une première quantité du fluide pendant au moins une première condition de fonctionnement et une seconde quantité supérieure du fluide pendant au moins une seconde condition de fonctionnement ;
un rotor faible vitesse (30) conçu pour tourner autour de l'axe central de moteur (A) avec la turbine basse pression (46) ;
une première pompe (106) qui est associée de manière fonctionnelle au rotor faible vitesse (30) de sorte que le fonctionnement de la première pompe (106) dépend de la rotation du rotor basse vitesse (30), la première pompe (106) ayant une première capacité de distribution de fluide conçue pour correspondre à au moins la première quantité ; et
une seconde pompe (144) ayant une seconde capacité de distribution de fluide conçue pour correspondre à au moins une différence entre la première quantité et la seconde quantité, la première pompe (106) fournissant le fluide pour le fonctionnement de l'ensemble de propulsion pendant la première et la seconde conditions de fonctionnement et la seconde pompe (144) fournissant le fluide pour le fonctionnement de l'ensemble de propulsion uniquement pendant la seconde condition de fonctionnement,
dans laquelle :
le fluide est un lubrifiant, et :
la seconde pompe (144) est inactive pendant la première condition de fonctionnement.

2. Turbine à gaz (20) selon la revendication 1, comprenant un dispositif de commande (148) conçu pour :
déterminer au moins une de la condition de fonctionnement de l'ensemble de propulsion ou une quantité du fluide nécessaire ; et
commander la seconde pompe (144) pour fournir une quantité correspondante du fluide à l'ensemble de propulsion.

3. Turbine à gaz (20) selon la revendication 1 ou 2, dans laquelle la seconde pompe (144) est entraînée par un élément de puissance distinct du rotor faible vitesse (30).

4. Turbine à gaz (20) selon une quelconque revendication précédente, dans laquelle la seconde capacité de distribution de fluide est inférieure à la première capacité de distribution de fluide.

5. Turbine à gaz (20) selon une quelconque revendication précédente, comprenant un module d'extraction de puissance (102) qui sert d'interface entre le rotor faible vitesse (30) et la première pompe à fluide (106).

6. Turbine à gaz (20) selon la revendication 5, comprenant au moins une autre pompe associée de manière fonctionnelle au module d'extraction de puissance (102) de sorte que l'autre pompe est entraînée sur la base de la rotation du rotor faible vitesse (30).

7. Procédé de fonctionnement d'une turbine à gaz (20) qui comporte un ensemble de propulsion comportant au moins une turbine haute pression (54) et une turbine basse pression (46), les turbines (46, 54) étant situées pour tourner autour d'un axe central de moteur (A), le fonctionnement de l'ensemble de propulsion nécessitant au moins un fluide comportant une première quantité du fluide pendant au moins une première condition de fonctionnement et une seconde quantité supérieure du fluide pendant au moins une seconde condition de fonctionnement, comprenant les étapes :
d'entraînement d'une première pompe (106) à l'aide de la rotation d'un rotor faible vitesse (30) conçu pour tourner autour de l'axe central de moteur (A) avec la turbine basse pression (46) pour fournir le fluide pour le fonctionnement de l'ensemble de propulsion pendant les première et seconde conditions de fonctionnement ; et
d'entraînement d'une seconde pompe (144) pour fournir le fluide pour le fonctionnement de l'ensemble de propulsion avec la première pompe (106) uniquement pendant la seconde condition de fonctionnement, une quantité du fluide fourni par la seconde pompe (144) correspondant à une différence entre la première quantité et la seconde quantité,
dans lequel :
le fluide est un lubrifiant ; et
le procédé comprend en outre la désactivation de la seconde pompe (144) pendant la première condition de fonctionnement.

8. Procédé selon la revendication 7, comprenant :
la détermination d'au moins une de la condition de fonctionnement de l'ensemble de propulsion ou d'une quantité du fluide nécessaire ; et
la commande de la seconde pompe (144) pour fournir une quantité correspondante du fluide à l'ensemble de propulsion.

9. Procédé selon les revendication 7 ou 8, comprenant l'entraînement de la seconde pompe (144) à l'aide d'un élément de puissance distinct du rotor faible vitesse (30).

10. Turbine à gaz (20) ou procédé selon la revendication 3 ou 9, dans laquelle/dans lequel l'élément de puissance comprend un moteur électrique (146).

11. Procédé selon l'une quelconque des revendications 7 à 10, dans lequel :
la première pompe (106) a une première capacité de distribution de fluide conçue pour correspondre au moins à la première quantité ; et
la seconde pompe (144) a une seconde capacité de distribution de fluide inférieure conçue pour correspondre à au moins une différence entre la première quantité et la seconde quantité.
